# EUROPÄISCHE PATENTSCHRIFT

(11) **EP 1 042 146 B1**
(45) Veröffentlichungstag und Bekanntmachung des Hinweises auf die Patenterteilung: **28.02.2007**
(21) Anmeldenummer: 99953633.7
(22) Anmeldetag: 31.08.1999
(51) Int. Cl.: B60S 1/08

(54) **SCHEIBENWISCHER-ANTRIEBSVORRICHTUNG**
WINDSHIELD WIPER DRIVE DEVICE
DISPOSITIF D'ENTRAINEMENT D'ESSUIE-GLACE

(30) Priorität: 08.09.1998 DE 19840895
(43) Veröffentlichungstag der Anmeldung: 11.10.2000
(73) Patentinhaber: ROBERT BOSCH GMBH, 70442 Stuttgart (DE)
(72) Erfinder: WEBER, Marcellus, D-77886 Lauf (DE); BRAUN, Peter, D-77830 Bühlertal (DE); MAY, Michael, D-77654 Offenburg (DE)
(74) Vertreter: Gleiss & Grosse
(86) Internationale Anmeldenummer: PCT/DE1999/002716
(87) Internationale Veröffentlichungsnummer: WO 2000/013948

(56) Entgegenhaltungen:
- WO-A-98/07601
- DE-A- 19 710 099
- FR-A- 2 457 794
- PATENT ABSTRACTS OF JAPAN vol. 1998, no. 03, 27. Februar 1998 (1998-02-27) & JP 09 301131 A (JIDOSHA DENKI KOGYO CO LTD), 25. November 1997 (1997-11-25)

## Beschreibung

Die Erfindung betrifft eine Scheibenwischer-Antriebsvorrichtung mit den im Oberbegriff des Anspruchs 1 genannten Merkmalen sowie ein Verfahren gemäß Anspruch 10.

### Stand der Technik

Aus der JP-A-09 301 131 sind eine Scheibenwischer-Antriebsvorrichtung gemäß dem Oberbegriff des Anspruchs 1 und ein Verfahren zum Betrieb eines Scheibenwischers gemäß dem Oberbegriff des Anspruchs 10 bekannt.

Es sind seit langem Scheibenwischer-Antriebsvorrichtungen bekannt, bei denen eine Drehbewegung eines in eine vorgegebene Richtung rotierenden Motors durch einen Exzenter-Mechanismus in eine Hin- und Herbewegung des Scheibenwischers umgesetzt wird. In jüngerer Zeit sind zunehmend auch Scheibenwischer-Antriebsvorrichtungen aufgekommen, bei denen der Antriebsmotor direkt in unterschiedlichen Drehrichtungen entsprechend der Hin- und Herbewegung des Wischers gesteuert wird. Bei derartigen Antriebsvorrichtungen ist es erforderlich, Positionen des Scheibenwischers, zumindest in den Umkehrpunkten seiner Bewegung, zu erfassen, um zum richtigen Zeitpunkt die Drehrichtung des Motors umschalten zu können. Herkömmliche Antriebsvorrichtungen verwenden zu diesem Zweck getrennte Detektoren für die verschiedenen Positionen, oder ein einzelner Detektor wird zur Erfassung von mehreren Detektanden, d. h. Gegenständen beliebiger Art, die von einem Detektor erfaßt werden können, eingesetzt, wobei jeder Detektand einer zu erfassenden Position entspricht.

Diese Art der Positionserfassung zur Steuerung der Scheibenwischer-Antriebsvorrichtung ist aufwendig und dementsprechend kostspielig. Deshalb werden Scheibenwischer-Antriebsvorrichtungen der genannten Art bislang hauptsächlich bei Kraftfahrzeugen im oberen Preissegment eingesetzt, obwohl sie Vorteile haben, die ihre allgemeinere Anwendung wünschenswert machen. Während nämlich bei Antriebsvorrichtungen mit Exzentermechanismus der Bewegungsbereich des Scheibenwischers durch den Exzentermechanismus vorgegeben ist und dementsprechend für jedes Fahrzeugmodell mit abweichendem Bewegungsbereich eine Neukonstruktion der Antriebsvorrichtung erforderlich ist, genügt es bei einer Antriebsvorrichtung mit reversierendem Motor, die Position eines Detektors oder eines Detektanden zu verändern, um so den Bewegungsbereich des Scheibenwischers an die Gegebenheiten jedes einzelnen Kraftfahrzeugmodells anzupassen. Diese Flexibilität von Scheibenwischer-Antriebsvorrichtungen mit reversierendem Motor macht sie außerdem besonders geeignet zur Anwendung bei Scheibenwischersystemen mit versenkter Parkstellung.

### Vorteile der Erfindung

Die Scheibenwischer-Antriebsvorrichtung nach Anspruch 1 zeichnet sich aus durch ihren einfachen und flexiblen Aufbau, der eine preiswerte Herstellung der Antriebsvorrichtung und damit ihre Verwendung auch bei preiswerteren Fahrzeugmodellen ermöglicht, und auch die Anpassung der Scheibenwischer-Antriebsvorrichtung an die Gegebenheiten beliebiger Fahrzeugmodelle vereinfacht. Gemäß der Erfindung genügt es nämlich, lediglich einen gegebenen Punkt des Bewegungsbereichs des Scheibenwischers direkt mit einem Detektor zu erfassen, von diesem Punkt aus kann die Seitwärtsbewegung des Scheibenwischers mit Hilfe eines inkrementellen Gebers relativ gemessen werden, was grundsätzlich die Erfassung einer beliebigen Zahl von Positionen des Scheibenwischers mit Hilfe eines einzigen Detektors ermöglicht. Dabei ist die Lage der Umkehrpunkte des Scheibenwischers definiert durch deren Entfernung von dem vom Detektor erfaßten Punkt des Bewegungsbereichs. Wie groß diese Entfernung in der einen oder anderen Bewegungsrichtung des Scheibenwischers sein soll, kann der Steuerschaltung je nach Umfeld, in dem die Scheibenwischer-Antriebsvorrichtung eingesetzt wird, passend vorgegeben werden.

Erfindungsgemäß ist vorgesehen, daß der Detektor zwischen einem ersten der zwei Umkehrpositionen des Scheibenwischers und der gegebenen Position ein von einem Detektanden ausgehendes Signal mit einem ersten Wert und zwischen der gegebenen Position und der zweiten Umkehrposition einen zweiten Wert erfaßt. Dadurch ist es der Steuerschaltung möglich, beim Einschalten der Scheibenwischerantriebsvorrichtung durch Abfragen des vom Detektor erfaßten Signalwerts zu entscheiden, auf welcher Seite der gegebenen Position sich der Scheibenwischer befindet, und dessen anfängliche Bewegungsrichtung entsprechend auszuwählen. Zweckmäßigerweise wird die Bewegungsrichtung dabei so gewählt, daß sich der Scheibenwischer auf die gegebene Position zubewegt, so daß der Detektor beim Durchgang durch die Position einen Wechsel des Signals erfaßt, anhand dessen die relative Wegmessung mit Hilfe des inkrementellen Gebers initialisiert werden kann.

Insbesondere dann, wenn nur zwei Positionen des Scheibenwischers, nämlich die Umkehrpositionen, erfaßt werden müssen, ist die einfachste Möglichkeit die, daß der festgelegte Weg von der gegebenen Position zur Umkehrposition für beide Bewegungsrichtungen gleich ist.

Gemäß einer besonders bevorzugten Weiterentwicklung der Erfindung umfaßt die Steuerschaltung ein Verzögerungsglied, um ferner die Bewegungsrichtung des Motors umzuschalten, wenn seit dem Durchgang des Scheibenwischers durch die gegebene Position eine bestimmte Zeit verstrichen ist. Wenn nämlich die Bewegung des Scheibenwischers durch ein Hindernis wie etwa abgerutschten Schnee auf der Windschutzscheibe oder dergleichen blockiert ist, und der Scheibenwischer aus diesem Grund seine Umkehrposition nicht mehr erreichen kann, so kann gemäß dieser Weiterentwicklung die Steuerschaltung die Bewegungsrichtung des Motors auch vor Erreichen der eigentlichen Umkehrposition umschalten und so einen Wischerbetrieb auf einem eingeschränkten Bewegungsbereich aufrechterhalten. Dabei kann das Verzögerungsglied für beide Bewegungsrichtungen des Scheibenwischers oder selektiv nur für eine der beiden Richtungen wirksam sein.

Vorzugsweise führen der Detektor und der Detektand relativ zueinander eine an die Bewegung des Scheibenwischers gekoppelte Bewegung aus. Zu diesem Zweck wird zumeist der Detektand an einem der Hin- und Herbewegung des Scheibenwischers folgenden Mechanismus befestigt sein, wohingegen der Detektor ortsfest ist.

Diverse unterschiedliche Ausgestaltungen von Detektor und Detektand sind möglich. So kann z. B. der Detektor ein Magnetfeldsensor, z. B. ein Hall-Sensor und der Detektand ein Magnetpol sein, dessen Feld mit dem Magnetfeldsensor wechselwirkt. Alternativ kommen auch ein Schleifkontakt als Detektor und eine an ein gegebenes Potential angeschlossene leitende Fläche als Detektand bzw. ein Photodetektor als Detektor und ein Fenster in einer lichtundurchlässigen Fläche oder ein lichtundurchlässiger Bereich auf einem transparenten Träger als Detektand in Frage.

Um eine Scheibenwischer-Parkfunktion bei der erfindungsgemäßen Scheibenwischer-Antriebsvorrichtung zu realisieren, ist die Steuerschaltung vorzugsweise mit einer Ausschaltefunktion ausgestattet, wobei die Steuerschaltung, wenn die Ausschaltefunktion aktiviert ist, die Bewegungsrichtung des Motors nicht umschaltet, wenn der Scheibenwischer die erste Umkehrposition erreicht hat, sondern den Motor ausschaltet, wenn der Scheibenwischer eine jenseits dieser Umkehrposition liegende Extremposition erreicht hat.

Diese Extremposition kann genauso wie die Umkehrpunkte durch Verfolgen des vom Scheibenwischer ab dem gegebenen Punkt zurückgelegten Weges mit Hilfe des inkrementellen Gebers ermittelt werden.

Alternativ besteht die Möglichkeit, den Detektanden so zu gestalten, daß an der Extremposition das vom Detektor erfaßte Signal vom ersten auf den zweiten Wert übergeht. In diesem Fall kann das Erreichen der Extremposition auch direkt mit Hilfe des Detektors bestimmt werden.

Gemäß einer weiteren Weiterentwicklung ist vorgesehen, daß ein Hilfsdetektand jenseits der Extremposition an den Detektanden angrenzt. Dieser Hilfsdetektand wird im normalen Betrieb der Scheibenwischer-Antriebsvorrichtung niemals vom Detektor erfaßt; wenn er jedoch erfaßt wird, so ist dies ein Hinweis darauf, daß ein Fehler in der Kopplung der Relativbewegung von Detektor und Detektand an die Bewegung des Scheibenwischers vorliegt, z. B. weil der Scheibenwischer nicht in der richtigen Position an seiner Welle befestigt worden ist, welcher behoben werden muß, um einen fehlerfreien Betrieb des Scheibenwischers zu ermöglichen.

Je nach Funktionsprinzip des Detektors kann der Hilfsdetektand z. B. eine Folge von alternierenden Magnetpolen, die bei ihrer Bewegung im Erfassungsbereich des Detektors zu einem schnell alternierenden Signal führen, eine an ein zweites Potential angeschlossene leitende Fläche oder eine teilweise transparente Fläche sein.

Weitere Merkmale und Vorteile der Erfindung ergeben sich aus der nachfolgenden Beschreibung von Ausführungsbeispielen mit Bezug auf die Figuren.

### Figuren

Es zeigen:
Figur 1 einen Teil einer erfindungsgemäßen Scheibenwischer-Antriebsvorrichtung;
Figur 2 einen Schnitt entlang der Linie II-II in Figur 1;
Figur 3 den in Figur 1 gezeigten Teil in einer zweiten Ausgestaltung der Erfindung;
Figur 4 einen Schnitt entlang IV-IV in Figur 3;
Figur 5 Detektor und Detektand nach der vorliegenden Erfindung in diversen Phasen des Bewegungszyklus des Scheibenwischers;
Figur 6 den zeitlichen Verlauf einzelner Signale, die für die Steuerung der Scheibenwischer-Antriebsvorrichtung Bedeutung haben;
Figur 7 den zeitlichen Verlauf von für die Steuerung relevanten Signalen gemäß einer weiterentwikkelten Ausgestaltung der Erfindung;
Figur 8 Detektor und Detektand bei Vorliegen eines Hindernisses auf der vom Scheibenwischer zu wischenden Scheibe;
Figur 9 Detektor und Detektand in einer versenkten Stellung; und
Figur 10 einen Detektanden mit Hilfsdetektand.

### Beschreibung von bevorzugten Ausgestaltungen

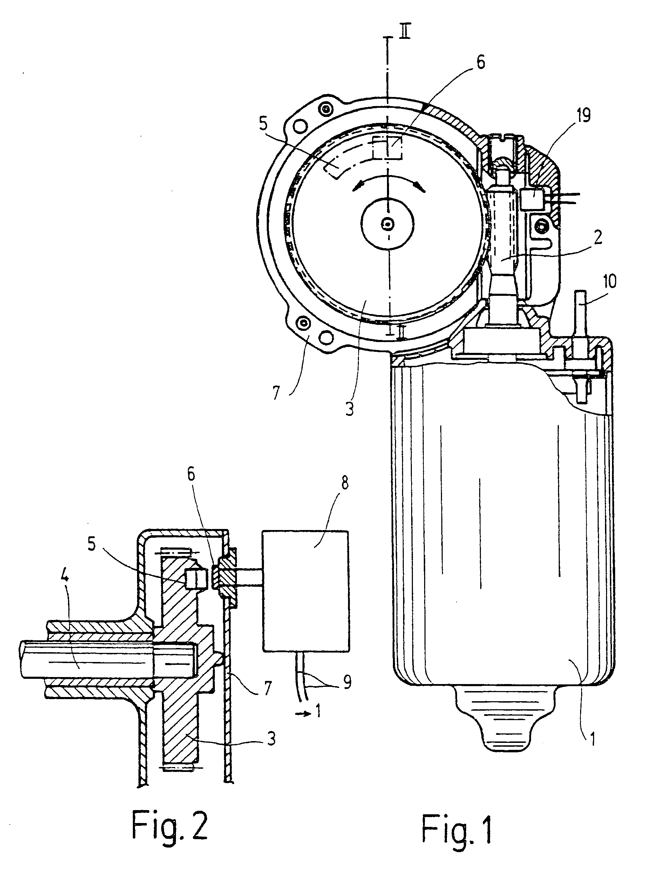

Figur 2 zeigt in Seitenansicht im Teilschnitt einen Motor 1 einer erfindungsgemäßen Scheibenwischer-Antriebsvorrichtung und ein daran angeschlossenes Untersetzungsgetriebe. Zu dem Untersetzungsgetriebe gehören eine Schnecke 2, die auf der Achse des Motors befestigt ist und ein durch die Schnecke 2 angetriebenes Schneckenrad 3. Ein inkrementeller Geber 19 erfaßt die Drehung der Schnecke 2 und gibt pro Umdrehung der Schnecke eine feste Zahl n von Impulsen an eine Steuerschaltung 8 (s. Fig. 2) aus. Je nach Polung der an zwei Versorgungsanschlüssen 10 (nur einer in der Figur sichtbar) anliegenden Versorgungsspannungen des Motors 1 treibt dieser das Schneckenrad 3 im Uhrzeigersinn oder Gegenuhrzeigersinn an. Figur 2 zeigt das Schneckenrad 3 in einem Schnitt entlang seiner Achse, in der in Figur 1 durch II-II gekennzeichneten Ebene. Das Schnekkenrad ist fest mit einer Antriebswelle 4 verbunden, die die Hin- und Herdrehbewegung des Schnekkenrades 3 auf einen Scheibenwischer (nicht gezeigt) überträgt.

Schnecke 2 und Schneckenrad 3 sind in einem gemeinsamen Gehäuse 7 untergebracht. Ein Hall-Sensor 6 ist in einer Öffnung des Gehäuses 7 montiert, wie insbesondere in Figur 2 zu sehen ist. Dem Hall-Sensor 6 gegenüber ist ein Magnet 5 in das Schnekkenrad 3 eingelassen. Er ist so orientiert, daß die Feldachse parallel zur Achse der Antriebswelle 4 verläuft, so daß im Laufe der Bewegung des Schnekkenrades 3 stets der gleiche Pol des Magneten 5 dem Hall-Sensor 6 zugewandt ist. Hall-Sensor 6 und Magnet 5 sind in Figur 1 als gestrichelte Umrisse dargestellt, da in der Perspektive der Figur 1 der Hall-Sensor 6 durch das Schneckenrad 3 verdeckt und deshalb eigentlich nicht sichtbar ist und der Magnet 5 an der vom Betrachter abgewandten Seite des Schneckenrades 3 liegt. Der Hall-Sensor 6 gibt zwei verschiedene Signalpegel an eine Steuerschaltung 8 aus, je nachdem, ob der Magnet 5 ihm gegenüber liegt, oder nicht. Die Steuerschaltung erkennt an der Änderung des Signalpegels vom Hall-Sensor 6, daß der Scheibenwischer einen gegebenen Punkt auf seiner Bahn erreicht hat, an dem eine Kante des Magneten 5 soeben den Hall-Sensor 6 überstreicht, wie in der Figur dargestellt. Auf die Details dieser Erfassung wird an späterer Stelle genauer eingegangen.

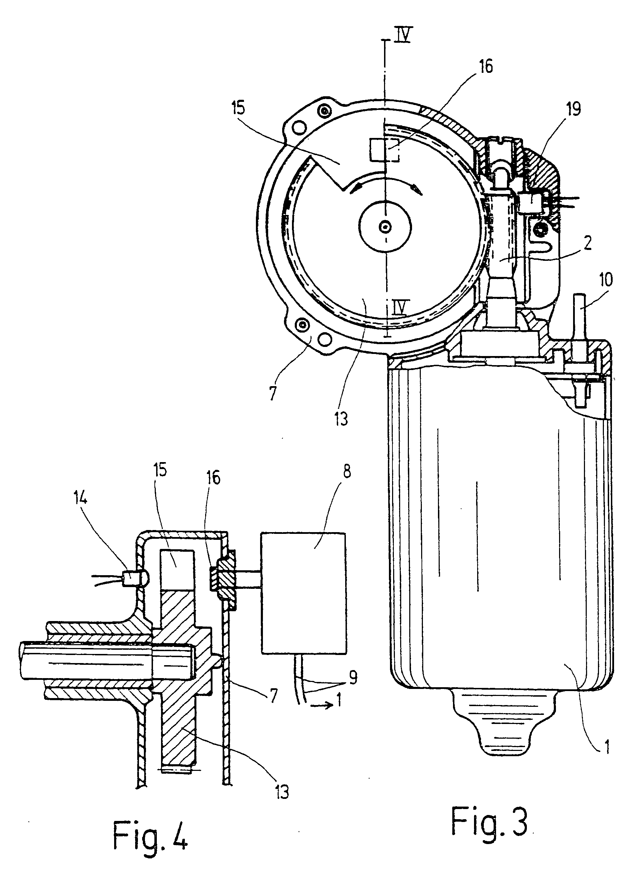

Figuren 3 und 4 zeigen eine zweite Ausgestaltung des Motors und Untersetzungsgetriebes einer erfindungsgemäßen Scheibenwischer-Antriebsvorrichtung. Teile, die bereits in Verbindung mit der Ausgestaltung der Figuren 1 und 2 beschrieben wurden, tragen die gleichen Bezugszeichen und werden nicht erneut beschrieben.

Bei dieser zweiten Ausgestaltung hat das Schneckenrad einen sektorförmigen Ausschnitt 15. Dieses Schneckenrad ist zwar nicht in der Lage, eine vollständige Umdrehung von 360° auszuführen, doch ist dies nicht störend, da auch der über das Schneckenrad 13 und die Antriebswelle 4 angetriebene Scheibenwischer keine vollständige Umdrehung ausführt. Anstelle eines Hall-Sensors ist bei dieser Ausgestaltung ein Photodetektor 16, z. B. eine Photodiode vorgesehen. An einer der Photodiode gegenüberliegenden Seite des Gehäuses 7 ist eine Lichtquelle 14, z. B. eine Leuchtdiode, eingelassen. Wenn der ausgeschnittene Sektor 15 zwischen der Lichtquelle 14 und dem Photodetektor 16 liegt, erfaßt dieser das ausgestrahlte und vom Sektor 15 durchgelassene Licht und gibt ein Signal mit einem ersten Wert an die Steuerschaltung 8 aus. Wenn das Schneckenrad 13 zwischen der Lichtquelle 14 und dem Photodetektor 16 liegt, erreicht letzteren nur wenig Licht, so daß ein zweiter Signalpegel ausgegeben wird. Immer dann, wenn der Scheibenwischer eine gegebene Position auf seiner Bahn passiert, welche der in Figur 3 gezeigten Stellung der Schneckenscheibe 3 bzw. ihres ausgeschnittenen Sektors 15 in Bezug auf den Photodetektor 16 entspricht, ändert das vom Photodetektor 16 an die Steuerschaltung 8 ausgegebene Signal seinen Wert, was es der Steuerschaltung 8 ermöglicht, zu erkennen, daß der Scheibenwischer die gegebenen Positionen passiert.

Selbstverständlich gibt es noch andere als die zwei oben beschriebenen Möglichkeiten, den Durchgang des Scheibenwischers durch die gegebene Position zu erfassen, z. B. könnte der Sektor-Ausschnitt 15 durch einen bei geeignetem Radius in Umfangsrichtung verlaufenden Schlitz im Schneckenrad ersetzt werden, das Schneckenrad könnte im wesentlichen transparent und nur im Bereich des entsprechenden Sektors lichtundurchlässig sein, etc. Es könnte auch anstelle des in Umfangsrichtung langgestreckten Magneten 5 oder des Sektors 15 ein Magnet ohne nennenswerte Ausdehnung in Umfangsrichtung oder ein radialer Schlitz verwendet werden, wobei dann die Steuerschaltung 8 den Durchgang des Scheibenwischers durch die gegebene Position nicht an einer Änderung des Signals erkennen müßte, sondern daran, daß das Signal zeitweilig einen anderen Wert annimmt.

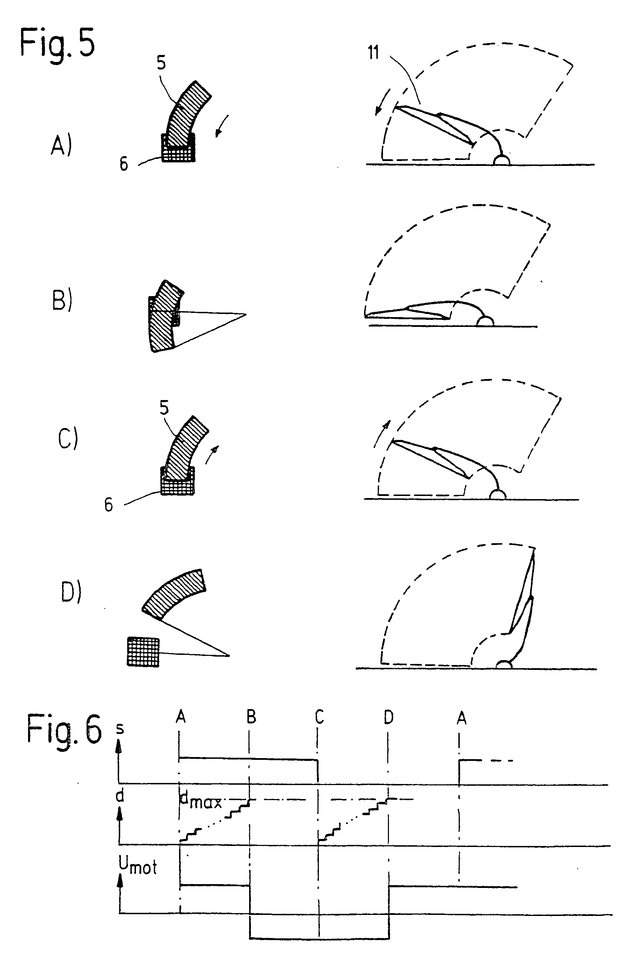

Die Arbeitsweise der erfindungsgemäßen Scheibenwischer-Antriebsvorrichtung wird im folgenden anhand von Figur 5 genauer erläutert: In Figur 5 zeigen die Teile A, B, C, D die Position des Magneten 5 und des Hall-Sensors der Ausgestaltung der Figuren 1 und 2 sowie die zugehörige Position eines Scheibenwischers 11 in vier verschiedenen Stadien von dessen Bewegung, die nachfolgend entsprechend den Teilen der Figur, in denen sie gezeigt sind, als A-, B-, C- bzw. D-Position bezeichnet werden.

In Teil A bewegen sich der Scheibenwischer 11 und der an diesen gekoppelte Magnet 5 im Gegenuhrzeigersinn, und der Magnet 5 beginnt soeben, mit dem Hall-Detektor 6 zu überlappen. Das vom Hall-Detektor ausgegebene Signal S (siehe Fig. 6) ändert sich von 0 auf einen ersten Wert.

Gleichzeitig beginnt die Steuerschaltung, Zählpulse zu addieren, die von dem inkrementellen Geber 19 geliefert werden. Das Zählergebnis ist in Figur 6 als Signal d dargestellt. Das Signal d nimmt zu, bis es bei der B-Position des Scheibenwischers und des Magneten einen Grenzwert dₘₐₓ erreicht. Sobald dieser Grenzwert dₘₐₓ erreicht ist, polt die Steuerschaltung .die Antriebsspannung Uₘₒₜ für den Motor um, die sie über Versorgungsleitungen 9 (siehe Figuren 2,4) ausgibt, um die Drehrichtung des Motors und damit die Bewegungsrichtung des Scheibenwischers 11 umzukehren. Die B-Position entspricht also der unteren Umkehrposition des Scheibenwischers.

Bei ihrer Bewegung in Gegenrichtung erreichen der Magnet und der Scheibenwischer die in Teil C gezeigte Position, in der der Magnet 5 soeben dabei ist, den Erfassungsbereich des Detektors 6 zu verlassen. Zu diesem Zeitpunkt fällt das Signal S wieder auf 0 ab, wie in Figur 6 zu sehen ist. Abermals beginnt die Steuerschaltung, Zählimpulse des inkrementellen Gebers 19 zu addieren und erzeugt so ein stufenweise ansteigendes Signal d. Nach einer gewissen zurückgelegten Wegstrecke erreicht das Signal d seinen Grenzwert dₘₐₓ in der Position D, woraufhin die Motorantriebsspannung Umot erneut ihr Vorzeichen wechselt. Der Scheibenwischer beginnt nun wieder, sich entgegen dem Uhrzeigersinn zu bewegen und erreicht so von neuem die in A gezeigte Position, woraufhin sich der Zyklus wiederholt.

Wie man leicht sieht, ist die Lage der Umkehrpositionen der Scheibenwischerbewegung nicht durch die Kontruktion des Antriebsmechanismus vorgegeben, sondern kann in einfacher Weise durch passende Auswahl des Schwellwerts dₘₐₓ oder durch Auswahl unterschiedlicher Schwellwerte für die beiden Umkehrpositionen bestimmt werden. So kann die erfindungsgemäße Antriebsvorrichtung leicht an den Einsatz in Kraftfahrzeugmodellen mit unterschiedlich großem Bewegungsbereich des Scheibenwischers angepaßt werden.

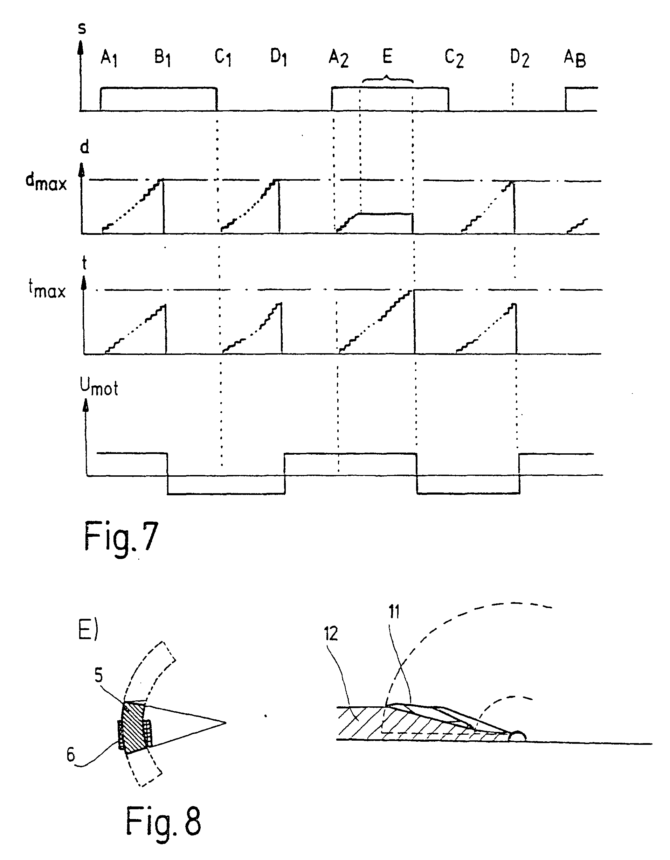

Figur 7 zeigt die Funktionsweise einer weiterentwickelten Ausgestaltung einer erfindungsgemäßen Scheibenwischer-Antriebsvorrichtung anhand des zeitlichen Verhaltens des Signals S des Hall-Sensors 6, des von der Steuerschaltung 8 gebildeten Werts dx, des seit dem gegebenen Punkt vom Scheibenwischer zurückgelegten Wegs, eines Verzögerungszeitwerts t und der über die Versorgungsleitungen 9 von der Steuerschaltung 8 an den Motor 1 ausgegebenen Versorgungsspannung. Diese weiterentwickelte Ausgestaltung unterscheidet sich von der mit Bezug auf Figuren 5 und 6 behandelten dadurch, daß bei ihr die Steuerschaltung zusätzlich einen Taktgeber und einen Zähler zum Zählen der vom Taktgeber ausgegebenen Impulse enthält. Der Zählwert dieser Impulse ist das in Figur 7 gezeigte Signal t.

Figur 7 zeigt zunächst einen normalen Arbeitszyklus der Antriebsvorrichtung mit Phasen A1, B1, C1, D1, die den in Figur 5 dargestellten A, B, C, D von Magnet und Hall-Sensor bzw. Scheibenwischer entsprechen. Die Steuerschaltung zählt Impulse des inkrementellen Gebers 19, bis der Zählwert d einen Grenzwert dₘₐₓ erreicht. Dies ist jeweils an den Umkehrpositionen B1 bzw. D1 der Fall.

Beim zweiten dargestellten Zyklus mit den Phasen A2, E2, C2, D2 hat sich auf der vom Scheibenwischer 11 zu reinigenden Scheibe ein Hindernis 12 gebildet, z. B. eine größere Menge Schnee, am unteren Ende des Wischbereichs, wie im rechten Teil der Figur 8 schematisch dargestellt. Der linke Teil von Figur 8 zeigt die entsprechende, mit E bezeichnete Position des Magneten 5 und des Hall-Sensors 6, wobei der gesamte Bewegungsbereich des Magneten als gestrichelter Umriß 17 dargestellt ist.

Der Scheibenwischer durchläuft noch normal die Position A (Phase A2), und die Steuerschaltung beginnt damit, die Impulse des Gebers 19 zu zählen; das Signal d nimmt zunächst zu. Gleichzeitig mit dem Durchgang des Scheibenwischers durch die gegebene Position in der Phase A2 beginnt die Steuerschaltung damit, den Wert t aufwärts zu zählen. Im ersten dargestellten Zyklus wurde t jedesmal (in den Phasen B1 und D1) auf 0 zurückgesetzt, wenn d den Grenzwert dₘₐₓ erreicht hatte. Im zweiten Zyklus erreicht d den Grenzwert dₘₐₓ nicht, weil der Scheibenwischer in der in Figur 8 gezeigten Position E steckengeblieben ist. Der Zählvorgang geht deshalb weiter, bis t einen Grenzwert tₘₐₓ erreicht und daraufhin t und d auf 0 zurückgesetzt werden. Gleichzeitig wird das Vorzeichen der Motorantriebsspannung Uₘₒₜ umgeschaltet, und der Antriebsmotor wechselt seine Drehrichtung. In der Phase C2 durchläuft der Scheibenwischer wieder den gegebenen Punkt, an dem das Signal S des Hall-Sensors 6 seinen Wert ändert. Die Wischbewegung geht von dort aus normal weiter, bis der Wischer ein zweites Mal blockiert wird.

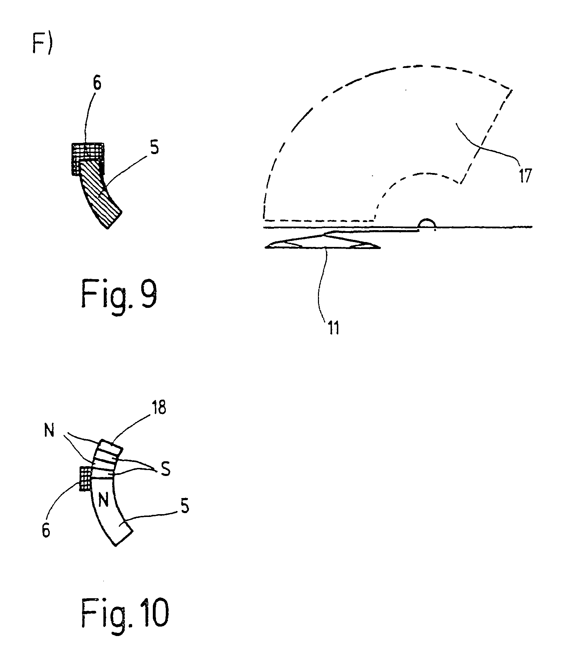

Figur 9 zeigt den Magneten 5 und den Hall-Sensor 6 bzw. den Scheibenwischer 11 einer anderen weiterentwickelten Ausgestaltung einer Scheibenwischer-Antriebsvorrichtung gemäß der Erfindung in einer mit F bezeichneten Position, in der sich der Scheibenwischer 11 außerhalb des durch die gestrichelte Umrißlinie bezeichnet Bewegungsbereichs 17 befindet. Diese Position nimmt der Scheibenwischer 11 dann ein, wenn er nicht benötigt wird. Um diese Position F anfahren zu können, ist bei der weiterentwickelten Scheibenwischer-Antriebsvorrichtung vorgesehen, daß der Fahrer, wenn er einen Schalter zum Ausschalten des Scheibenwischers betätigt, eine Ausschaltefunktion der Steuerschaltung 8 in Gang setzt. Wenn die Ausschaltefunktion aktiviert ist, überwacht die Steuerschaltung 8 nicht mehr, ob im Anschluß an die Phase A das Signal d seinen Grenzwert dₘₐₓ überschreitet. Somit findet keine Richtungsumkehr des Motors 1 mehr statt, wenn der Scheibenwischer die der Phase B entsprechende Position B erreicht. Stattdessen bewegt sich der Scheibenwischer so lange weiter, bis der Magnet 5 den Hall-Sensor 6 fast passiert hat und das Signal S des Hall-Sensors 6 wieder abzufallen beginnt. Wenn dies der Fall ist, schaltet die Steuerschaltung 8 den Motor 1 aus. So wird bei dieser Ausgestaltung die in Figur 9 unten liegende Kante des Magneten 5 zur Markierung der gegebenen Position A, C im Bewegungsbereich des Scheibenwischers genutzt. Anhand der anderen, in der Figur oben liegenden Kante des Magneten 5 wird das Erreichen der versenkten Position F des Scheibenwischers erfaßt.

Alternativ kann beim Aktivieren der Ausschaltefunktion auch der Grenzwert dₘₐₓ, der der Position des Scheibenwischers an der Umkehrposition B entspricht, durch einen höheren Grenzwert ersetzt werden. In diesem Fall bewegt sich der Scheibenwischer 11 bis zu der durch den erhöhten Grenzwert definierten Position, und die Steuerschaltung schaltet bei Erreichen dieser Position den Motor aus.

Durch Ausschalten der Zündung eines Fahrzeugs kann eine Situation auftreten, in der die Stromversorgung des Motors unterbrochen wird, während sich der Wischer an einer beliebigen Stelle zwischen den Umkehrpositionen B und D befindet, so daß der Wischer auf der Scheibe stehenbleibt. Um auch beim Wiedereinschalten der Zündung in einem solchen Fall ein korrektes Wiederanlaufen des Scheibenwischers zu gewährleisten, bestimmt die Steuerschaltung beim Start der Scheibenwischer-Antriebsvorrichtung den Wert des Signals S. Wenn dieses Signal den ersten Wert hat, so befindet sich der Scheibenwischer an der Umkehrposition B oder zwischen dieser und der gegebenen Position A beziehungsweise C. In diesem Fall wählt die Steuerschaltung 8 die Polung der Versorgungsspannung des Motors so, daß dieser in Richtung der Umkehrposition D anläuft, und zwar unabhängig davon, in welcher Richtung sich der Scheibenwischer vor dem Ausschalten bewegt hat. Wenn hingegen die Steuerschaltung am Wert des Signals S erkennt, daß sich der Wischer zwischen den Positionen A, C und D befindet, treibt sie den Motor in Richtung der Position B an. Auf diese Weise wird unabhängig von der Startposition des Scheibenwischers die Steuerschaltung durch einen Durchgang durch die Position A, C initialisiert, so daß sie die Zählimpulse des inkrementellen Gebers 19 richtig auswerten kann.

Figur 10 zeigt einen Magneten 5, einen Hall-Sensor 6 und Hilfsmagnete 18 gemäß einer Variante der mit Bezug auf Figur 9 beschriebenen Ausgestaltung. Genauso wie in Figur 9 sind der Magnet 5 und der Hall-Sensor 6 in der Position F gezeigt. Die Magnete 18 sind mit jeweils abwechselnder Polarität an die versenkte Stellung des Scheibenwischers markierende Kante des Magneten 5 anschließend angeordnet. Wenn die Scheibenwischer-Antriebsvorrichtung korrekt eingestellt ist, werden die Hilfsmagneten 18 vom Hall-Sensor 6 niemals erfaßt. Sie können allenfalls dann erfaßt werden, wenn nach einer Reparatur oder Wartung der Scheibenwischer-Antriebsvorrichtung die Stellung des gemeinsam mit dem Scheibenwischer 11 beweglichen Magneten 5 relativ zu dem Hall-Sensor 6 verfälscht worden ist. In einem solchen Fall kann es vorkommen, daß einige der Hilfsmagnete, deren Abmessung in Bewegungsrichtung im Vergleich zu der des Magneten 5 übertrieben dargestellt ist, sich vor dem Sensor 6 entlangbewegen und so zu einem schnellen Alternieren des Signals S führen. Anhand dieses im Vergleich zum vom inkrementellen Geber gemeldeten tatsächlich zurückgelegten Weg zu schnell schwankenden Signals S kann die Steuerschaltung erkennen, daß die Hilfsmagnete 18 vom Hall-Sensor 6 erfaßt werden und kann die Fehlstellung ggf. selbsttätig korrigieren oder die Ausgabe einer Fehlermeldung veranlassen, so daß die Störung schnell behoben werden kann.

Die vorliegende Erfindung ist hier zwar schwerpunktmäßig mit Bezug auf Magnete und einen Hall-Sensor zur Erfassung der Position des Scheibenwischers beschrieben worden, doch ist offensichtlich, daß das Erfindungskonzept nicht auf eine bestimmte Kombination von Detektor und Detektand beschränkt ist. Vielmehr ist es anhand der oben gegebenen Lehre für den Fachmann ohne weiteres möglich, zur Positionserfassung auch optische, elektromechanische oder andere Mittel einzusetzen.

## Patentansprüche

1. Scheibenwischer-Antriebsvorrichtung zum Antreiben eines Scheibenwischers (11) in einer alternierenden Bewegung in einem Bewegungsbereich (17) zwischen zwei Umkehrpositionen (B,D), mit einem Motor (1) zum Bewegen des Scheibenwischers (11), mit einem Detektor (6,16) und einem kreisring segment förmigen Detektanden (5,15) zum Erfassen eines Zeitpunkts, an dem der Scheibenwischer (11) eine gegebene Position (A,C) des Bewegungsbereichs (17) passiert, mit einer Steuerschaltung (8) zum Umschalten der Bewegungsrichtung des Motors (1) an jeder Umkehrposition (B,D), wobei die Scheibenwischer-Antriebsvorrichtung einen inkrementellen Geber (19) zum Erfassen des vom Scheibenwischer (11) ab der gegebenen Position (A,C) zurückgelegten Wegs umfasst, **dadurch gekennzeichnet,**
- **dass** die Steuerschaltung (8) die Bewegungsrichtung des Motors (1) umschaltet, sobald erfasst wird, dass der Scheibenwischer (11) einen festgelegten Weg zurückgelegt hat,
- **dass** die Umfangserstreckung und Positionierung des Kreisringsegments des Detektanden (5,15) derart gewählt sind, dass der Detektor (6,16) zwischen einer ersten Umkehrposition (B) und der gegebenen Position (A,C) ein Signal des Detektanden (5,15) mit einem ersten Wert und zwischen der gegebenen Position (A,C) und der zweiten Umkehrposition (D) mit einem zweiten Wert erfasst, und
- **dass** die Steuerschaltung (8) beim Einschalten die Bewegungsrichtung des Motors (1) in Abhängigkeit vom Wert des vom Detektor (6,16) erfassten Signals (S) wählt.

2. Scheibenwischer-Antriebsvorrichtung nach Anspruch 1, **dadurch gekennzeichnet, daß** der festgelegte Weg für beide Bewegungsrichtungen gleich ist.

3. Scheibenwischer-Antriebsvorrichtung nach einem der vorhergehenden Ansprüche, **dadurch gekennzeichnet, daß** die Steuerschaltung (8) ein Verzögerungsglied umfaßt, um ferner die Bewegungsrichtung des Motors (1) umzuschalten, wenn seit dem Durchgang des Scheibenwischers (11) durch die gegebene Position (A, C) eine bestimmte Zeit (tₘₐₓ) verstrichen ist.

4. Scheibenwischer-Antriebsvorrichtung nach Anspruch 1, **dadurch gekennzeichnet, daß** der Detektor (6) und der Detektand (5) relativ zueinander eine an die Bewegung des Scheibenwischers (11) gekoppelte Bewegung ausführen.

5. Scheiberwischer-Antriebsvorrichtung nach Anspruch 1 oder 4, **dadurch gekennzeichnet, daß** der Detektor und der Detektand ein Magnetfeldsensor (6) und ein diesem zugewandter Pol eines Magneten (5) oder ein Schleifkontakt und eine an ein gegebenes Potential angeschlossene leitende Fläche oder ein Photodetektor (16) und ein Fenster (15) in einer lichtundurchlässigen Fläche (13) oder ein lichtundurchlässiger Bereich auf einem transparenten Träger sind.

6. Scheibenwischer-Antriebsvorrichtung nach einem der vorhergehenden Ansprüche, **dadurch gekennzeichnet, daß** die Steuerschaltung (8) über eine Ausschaltefunktion verfügt, wobei die Steuerschaltung (8), wenn die Ausschaltefunktion aktiviert ist, die Bewegungsrichtung des Motors (1) nicht umschaltet, wenn der Scheibenwischer (11) die erste Umkehrposition (B) erreicht hat, sondern den Motor (1) ausschaltet, wenn der Scheibenwischer eine jenseits dieser Umkehrposition (B) liegende Extremposition (F) erreicht hat.

7. Scheibenwischer-Antriebsvorrichtung nach Anspruch 6, **dadurch gekennzeichnet, daß** der Detektand (5) so gestaltet ist, daß an der Extremposition (F) das vom Detektor (6) erfaßte Signal (S) vom ersten auf den zweiten Wert übergeht.

8. Scheibenwischer-Antriebsvorrichtung nach Anspruch 6 oder 7, **gekennzeichnet durch** einen Hilfsdetektanden (18), der jenseits der Extremposition (F) an den Detektanden angrenzt und dessen Erfassung **durch** den Detektor (6) auf einen Fehler in der Kopplung der Relativbewegung von Detektor (6) und Detektand (15) an die Bewegung des Scheibenwischers (11) hinweist.

9. Scheibenwischer-Antriebsvorrichtung nach Anspruch 8, wenn Anspruch 6 auf Anspruch 5 rückbezogen ist, **dadurch gekennzeichnet, daß** der Hilfsdetektand eine Folge von alternierenden Magnetpolen (18) oder eine an ein zweites Potential angeschlossene leitende Fläche oder eine teilweise transparente Fläche ist.

10. Verfahren zum Betrieb eines Scheibenwischers (11) in einer alternierenden Bewegung in einem Bewegungsbereich (17) zwischen zwei Umkehrpositionen (B,D) mit einem Motor (1), wobei ein Detektor (6,16) einen Zeitpunkt erfasst, an dem der Scheibenwischer (11) eine gegebene Position (A,C) des Bewegungsbereichs (17) passiert, eine Steuerschaltung (8) die Bewegungsrichtung des Motors (1) an jeder Umkehrposition (B,D) umschaltet und ein inkrementeller Geber (19) den vom Scheibenwischer (11) ab der gegebenen Position (A,C) zurückgelegten Weg erfasst, **dadurch gekennzeichnet,**
- **dass** die Steuerschaltung (8) die Bewegungsrichtung des Motors (11) umschaltet, sobald erfasst wird, dass der Scheibenwischer (11) einen festgelegten Weg zurückgelegt hat,
- **dass** der Detektor (6.16) zwischen einer ersten Umkehrposition (B) und der gegebenen Position (A,C) ein von einem Detektanden (5,15) ausgehendes Signal mit einem ersten Wert und zwischen der gegebenen Position (A,C) und der zweiten Umkehrposition (D) einen zweiten Wert erfasst, und
- **dass** die Steuerschaltung (8) beim Einschalten die Bewegungsrichtung des Motors (1) in Abhängigkeit vom Wert des vom Detektor (6,16) erfassten Signals (S) wählt.

## Claims

1. Windscreen-wiper drive apparatus for driving a windscreen wiper (11) to move alternately between two reversal positions (B, D) in a movement region (17), having a motor (1) for moving the windscreen wiper (11), having a detector (6, 16) and a detectand (5, 15), which is in the form of a segment of a ring, for detecting a time at which the windscreen wiper (11) passes a specified position (A, C) of the movement region (17), having a control circuit (8) for changing the movement direction of the motor (1) at each reversal position (B, D), with the windscreen-wiper drive apparatus comprising an incremental transducer (19) for detecting the distance covered by the windscreen wiper (11) starting from the specified position (A, C), **characterized**
- **in that** the control circuit (8) changes the movement direction of the motor (1) as soon as it is detected that the windscreen wiper (11) has covered a defined distance,
- **in that** the circumferential extent and positioning of the segment of the ring of the detectand (5, 15) is selected in such a way that the detector (6, 16) detects a signal of the detectand (5, 15) with a first value between a first reversal position (B) and the specified position (A, C) and detects a second value between the specified position (A, C) and the second reversal position (D), and
- **in that**, when the windscreen-wiper drive apparatus is switched on, the control circuit (8) selects the movement direction of the motor (1) as a function of the value of the signal (S) detected by the detector (6, 16).

2. Windscreen-wiper drive apparatus according to Claim 1, **characterized in that** the defined distance is the same for both movement directions.

3. Windscreen-wiper drive apparatus according to either of the preceding claims, **characterized in that** the control circuit (8) comprises a delay element in order to also change the movement direction of the motor (1) when a specific time (tₘₐₓ) has elapsed since the windscreen wiper (11) passed through the specified position (A, C).

4. Windscreen-wiper drive apparatus according to Claim 1, **characterized in that** the detector (6) and the detectand (5) execute a movement in relation to one another which is coupled to the movement of the windscreen wiper (11).

5. Windscreen-wiper drive apparatus according to Claim 1 or 4, **characterized in that** the detector and the detectand are a magnetic-field sensor (6) and a pole of a magnet (5) which faces said magnetic-field sensor, or a sliding contact and a conductive area which is connected to a specified potential, or a photodetector (16) and a window (15) in an opaque area (13) or an opaque region on a transparent support.

6. Windscreen-wiper drive apparatus according to one of the preceding claims, **characterized in that** the control circuit (8) has a switch-off function, with the control circuit (8), when the switch-off function is activated, not changing the movement direction of the motor (1) when the windscreen wiper (11) reaches the first reversal position (B) but switching off the motor (1) when the windscreen wiper reaches an extreme position (F) beyond this reversal position (B).

7. Windscreen-wiper drive apparatus according to Claim 6, **characterized in that** the detectand (5) is designed such that the signal (S) detected by the detector (6) changes from the first value to the second value at the extreme position (F).

8. Windscreen-wiper drive apparatus according to Claim 6 or 7, **characterized by** an auxiliary detectand (18) which adjoins the detectand beyond the extreme position (F) and, if it is detected by the detector (6), indicates a fault in the coupling of the relative movement of the detector (6) and detectand (5) to the movement of the windscreen wiper (11).

9. Windscreen-wiper drive apparatus according to Claim 8, if Claim 6 refers back to Claim 5, **characterized in that** the auxiliary detectand is a sequence of alternating magnet poles (18), or a conductive area which is connected to a second potential, or a partly transparent area.

10. Method for operating a windscreen wiper (11) to move alternately between two reversal positions (B, D) in a movement region (17) using a motor (1), with a detector (6, 16) detecting a time at which the windscreen wiper (11) passes a specified position (A, C) of the movement region (17), a control circuit (8) changing the movement direction of the motor (1) at each reversal position (B, D), and an incremental transducer (19) detecting the distance covered by the windscreen wiper (11) starting from the specified position (A, C), **characterized**
- **in that** the control circuit (8) changes the movement direction of the motor (1) as soon as it is detected that the windscreen wiper (11) has covered a defined distance,
- **in that** the detector (6, 16) detects a signal, which is transmitted by a detectand (5, 15), with a first value between a first reversal position (B) and the specified position (A, C) and detects a second value between the specified position (A, C) and the second reversal position (D), and
- **in that**, when the windscreen-wiper drive apparatus is switched on, the control circuit (8) selects the movement direction of the motor (1) as a function of the value of the signal (S) detected by the detector (6, 16).

## Revendications

1. Dispositif d'entraînement d'essuie-glace pour entraîner un essuie-glace (11) suivant un mouvement alternatif dans une plage de mouvement (17) entre deux positions d'inversion (B, D) comprenant :
- un moteur (1) pour déplacer l'essuie-glace (11),
- un détecteur (6, 16) et des secteurs à détecter (5, 15) en forme de segments de cercle pour saisir l'instant auquel l'essuie-glace (11) passe une position donnée (A, C) dans la plage de mouvement (17),
- un circuit de commande (8) pour inverser le sens de fonctionnement du moteur (1) à chaque position d'inversion (B, D),
le dispositif d'entraînement d'essuie-glace comprenant un capteur incrémental (19) pour saisir le trajet parcouru par l'essuie-glace (11) à partir de la position donnée (A, C),
**caractérisé en ce que**
- le circuit de commande (8) inverse le sens de mouvement du moteur (1) dès que l'on a détecté que l'essuie-glace (11) a parcouru un trajet fixé,
- l'extension périphérique et le positionnement du segment d'anneau de cercle des secteurs à détecter (5, 15) sont choisis pour que le détecteur (6, 16) saisisse entre une première position d'inversion (B) et la position donnée (A, C), un signal des secteurs à détection (5, 15) ayant une première valeur, et entre la position donnée (A, C) et la seconde position d'inversion (D) un signal ayant une seconde valeurs, et
- le circuit de commande (8) en inversant, sélectionne le sens de mouvement du moteur (1), en fonction de la valeur du signal (S) saisi par le détecteur (6, 16).

2. Dispositif d'entraînement d'essuie-glace selon la revendication 1,
**caractérisé en ce que**
le trajet fixé est le même pour les deux sens de déplacement.

3. Dispositif d'entraînement d'essuie-glace selon l'une des revendications précédentes,
**caractérisé en ce que**
le circuit de commande (8) comprend un élément de temporisation pour inverser en outre le sens de mouvement du moteur (1) si un certain temps (tₘₐₓ) s'est écoulé depuis le passage de l'essuie-glace (11) par la position donnée (A, C).

4. Dispositif d'entraînement d'essuie-glace selon la revendication 1,
**caractérisé en ce que**
le détecteur (6) et le secteur à détecter (5) exécutent l'un par rapport à l'autre un mouvement relatif couplé au mouvement de l'essuie-glace (11).

5. Dispositif d'entraînement d'essuie-glace selon la revendication 1 ou 4,
**caractérisé en ce que**
le détecteur et le secteur à détecter sont respectivement un détecteur de champ magnétique (6) et un pôle correspondant d'un aimant (5) ou un contact frottant et une surface conductrice reliée à un potentiel donné ou un photodétecteur (16) et une fenêtre (15) d'une surface opaque (13) ou une zone opaque d'un support transparent.

6. Dispositif d'entraînement d'essuie-glace selon l'une des revendications précédentes,
**caractérisé en ce que**
le circuit de commande (8) comporte une fonction de coupure, le circuit de commande (8) n'inversant pas le sens de mouvement du moteur (1) si la fonction de coupure est activée, lorsque l'essuie-glace (11) atteint la première position d'inversion (B) mais coupe le moteur (1) lorsque l'essuie-glace atteint une position extrême (F) située de l'autre côté de cette position d'inversion (B).

7. Dispositif d'entraînement d'essuie-glace selon la revendication 6,
**caractérisé en ce que**
le secteur à détecter (5) est conçu pour qu'à la position extrême (F), le signal (S) saisi par le détecteur (6) passe d'une première valeur à une seconde valeur.

8. Dispositif d'entraînement d'essuie-glace selon la revendication 6 ou 7,
**caractérisé par**
un secteur à détecter auxiliaire (18) situé au-delà de la position extrême (F) adjacente au secteur à détecter et dont la saisie par le détecteur (6) indique qu'il y a un défaut dans le couplage du mouvement relatif entre le détecteur (6) et le secteur à détecter (15) pour le mouvement de l'essuie-glace (11).

9. Dispositif d'entraînement d'essuie-glace selon la revendication 8 reliée à la revendication 6 elle-même reliée à la revendication 5,
**caractérisé en ce que**
le secteur à détecter auxiliaire est une succession de pôles magnétiques (18) alternés ou une surface conductrice reliée à un second potentiel ou une surface partiellement transparente.

10. Procédé de commande d'un essuie-glace (11) suivant un mouvement alternatif dans une plage de mouvement (17) entre deux positions d'inversion (B, D) par un moteur (1), un détecteur (6, 16) saisissant l'instant auquel l'essuie-glace (11) passe une position (A, C) donnée de la plage de mouvement (17), avec un circuit de commande (8) qui inverse le sens de mouvement du moteur (1) à chaque position d'inversion (B, D) et un capteur incrémental (19) qui saisit le trajet parcouru par l'essuie-glace (11) à partir de la position (A, C) donnée,
**caractérisé en ce que**
- le circuit de commande (8) inverse le sens de mouvement du moteur (11) dès que l'on a détecté que l'essuie-glace (11) a parcouru un chemin fixé,
- le détecteur entre une première position d'inversion (B) et la position donnée (A, C), saisit un signal émis par un secteur à détecter (5, 15) ayant une première valeur, et ayant une seconde valeur entre la position donnée (A, C) et la seconde position d'inversion (D), et
- au moment du branchement, le circuit de commande (8) choisit le sens de mouvement du moteur (1) en fonction de la valeur du signal (S) saisi par le détecteur (6, 16).
